# EUROPEAN PATENT APPLICATION

(11) **EP 4 600 313 A1**
(43) Date of publication of application: **13.08.2025**
(21) Application number: 23874772.9
(22) Date of filing: 29.09.2023
(51) Int. Cl.: C09D 1/00, B32B 9/00, C09D 7/61, C09D 7/63

(54) **GAS-BARRIER COATING COMPOSITION AND GAS-BARRIER LAMINATE**

(30) Priority: 03.10.2022 JP 2022159731
(71) Applicant: Toyo Seikan Group Holdings, Ltd., Shinagawa-ku Tokyo 141-8627 (JP)
(72) Inventor: ITOU, Midori, Yokohama-shi, Kanagawa 240-0062 (JP); MIYAI, Tomohiro, Yokohama-shi, Kanagawa 240-0062 (JP); TSURUTA, Kazuhiro, Yokohama-shi, Kanagawa 240-0062 (JP); KOBAYASHI, Kaede, Yokohama-shi, Kanagawa 240-0062 (JP)
(74) Representative: J A Kemp LLP
(86) International application number: PCT/JP2023/035626
(87) International publication number: WO 2024/075645

(57) **Abstract**

The present invention relates to a gas-barrier coating composition containing a metal oxide and a phosphoric acid compound, and can provide a coating composition capable of efficiently forming a colorless and transparent gas-barrier coating film having more excellent oxygen barrier properties and water vapor barrier properties, by further blending at least one selected from a metal alkoxide, a hydrolysate of the metal alkoxide, and a metal hydroxide; and a gas-barrier laminate provided with the gas-barrier coating film (gas-barrier layer).

## Description

### Technical Field

The present invention relates to a gas-barrier coating composition and a gas-barrier laminate having a coating film formed from the coating composition, and more specifically, relates to a coating composition which is excellent in oxygen barrier properties and water vapor barrier properties and can suppress yellowing of a coating film, and a gas-barrier laminate including the coating film.

### Background Art

Gas-barrier laminates produced by forming a film containing a metal atom and a phosphorus atom as constituent components on a plastic base material have been known.

For example, Patent Document 1 proposes a substantially continuous and substantially amorphous gas transmission prevention film including a metal orthophosphate salt, the metal orthophosphate salt having a metal to phosphorus atomic ratio of about from 2.3 to 0.5, in which from 50 to 100% of the metal atoms are aluminum, from 0 to 50% of the metal atoms are selected from tin, titanium, and zirconium, and from 0 to approximately 20% of the metal atoms are selected from zinc, chromium, and magnesium.

However, such a gas transmission prevention film has not yet been satisfactory in terms of its oxygen barrier properties and water vapor barrier properties. Further, the document indicates that a resin is added to improve adhesion to a substrate to be coated, but an effect of improving oxygen and water vapor barrier performance of a coating film by addition of a resin has not been clarified.

To solve such issues, Patent Document 2 describes a composite structure including a base material (X) and a layer (Y) stacked on the base material (X), the layer (Y) containing a reaction product (R); the reaction product (R) being a reaction product formed by a reaction at least between a metal oxide (A) and a phosphorus compound (B); in an infrared absorption spectrum of the layer (Y) in a range from 800 to 1400 cm⁻¹, a fraction (n¹) at which infrared absorption reaches maximum being in a range from 1080 to 1130 cm⁻¹; and the metal oxide (A) containing a metal atom (M), which is aluminum.

The composite structure described in Patent Document 2 satisfies both oxygen barrier properties and water vapor barrier properties. However, there is a concern in terms of stability against acids and alkalis of contents.

The present inventors have proposed a coating composition in which a composite structure including a reaction product of a metal oxide and a phosphorus compound solves the above-described problems and which can exhibit more excellent oxygen barrier properties and water vapor barrier properties due to blending of a specific additive (Patent Document 3).

### Citation List

### Patent Documents

Patent Document 1: JP S57-042032 B
Patent Document 2: JP 4961054 B
Patent Document 3: WO 2022/075352

### Summary of Invention

### Technical Problem

Due to the gas-barrier coating composition according to Patent Document 3 containing an amine compound containing a polyvalent metal ion and an organic carboxylic acid as specific additives, the polyvalent metal ion makes up for metal ions, and the amine compound reacts with the metal ions, carboxylic acid and phosphoric acid and is incorporated into the crosslinked structure to function as a binder between the metal oxide particles, and thus a defect-free coating film is formed. Therefore, more excellent oxygen barrier properties and water vapor barrier properties can be exhibited.

However, the coating film formed from the coating composition of Patent Document 3 tends to discolor as yellow due to the reaction between the amine compound and the carboxylic acid which is a kind of carbonyl compound, and thus has not yet been sufficiently satisfactory in applications where a colorless and transparent coating film is required. Further, since the reaction between the amine compound and the carboxylic acid requires a high temperature and a long time, a coating composition capable of efficiently forming a coating film at a low temperature in a short time is desired.

Accordingly, an object of the present invention is to provide a gas-barrier coating composition containing a metal oxide and a phosphoric acid compound, the coating composition being capable of efficiently forming a colorless and transparent gas-barrier coating film having more excellent oxygen barrier properties and water vapor barrier properties; and a gas-barrier laminate provided with the gas-barrier coating film (gas-barrier layer).

### Solution to Problem

According to the present invention, there is provided a gas-barrier coating composition containing: at least one selected from a metal alkoxide, a hydrolysate of the metal alkoxide, and a metal hydroxide; a metal oxide; and a phosphoric acid compound or sulfuric acid compound.

In the gas-barrier coating composition of the present invention, suitably:
[1] a metal species of the metal alkoxide and the metal hydroxide is at least one selected from aluminum, titanium, iron and zirconium;
[2] the metal alkoxide is at least one selected from methoxide, ethoxide, propoxide, isopropoxide, butoxide, isobutoxide, sec-butoxide, and tert-butoxide;
[3] the metal alkoxide is aluminum isopropoxide;
[4] the metal hydroxide is aluminum hydroxide;
[5] the metal oxide is zirconium oxide or aluminum oxide; and
[6] the phosphoric acid compound is at least one selected from orthophosphoric acid, metaphosphoric acid, a polyphosphoric acid, and a cyclic polyphosphoric acid.

According to the present invention, there is also provided a gas-barrier laminate including, on a base material, a coating film including the above-described gas-barrier coating composition, wherein the coating film is a reaction product produced by a reaction of: at least one selected from a metal alkoxide, a hydrolysate of the metal alkoxide, and metal hydroxide; a metal oxide; and a phosphoric acid compound or sulfuric acid compound.

In the gas-barrier laminate of the present invention, suitably:
[1] the coating film has a b* value of less than 2.2 as measured by color measurement;
[2] a value of a content ratio (Al/Zr) between Zr(Zr-kα) and Al(Al-kα) in the coating film by X-ray fluorescence measurement is in a range from 0.06 to 0.35;
[3] a value of a content ratio (P/Zr) between Zr(Zr-kα) and P(P-kα) in the coating film by X-ray fluorescence measurement is in a range from 1.30 to 1.82;
[4] the gas-barrier laminate further includes an anchor coat layer provided between the base material and the coating film; and
[5] in a case where the base material includes a biaxially stretched polyester with a thickness of 12 µm, the coating film in an applied amount of 2.0 g/m² is formed on the base material, and a non-stretched polypropylene film with a thickness of 50 µm is disposed on the coating film via an adhesive layer, the gas-barrier laminate has an oxygen transmission rate of 25 cc/m²•day•atm (at 40°C and 90% RH) or less and a water vapor transmission rate of 5.5 g/m²•day (at 40°C and 90% RH) or less.

### Advantageous Effects of Invention

Since the gas-barrier coating composition of the present invention contains at least one selected from a metal alkoxide, a hydrolysate of the metal alkoxide, and a metal hydroxide together with a metal oxide and a phosphoric acid compound, it is possible to efficiently form a coating film having excellent oxygen barrier properties and water vapor barrier properties due to a uniform and dense crosslinked structure formed by the metal oxide and the phosphoric acid compound, and having excellent transparency without yellowing.

In addition, the metal alkoxide, the hydrolysate of the metal alkoxide, and the metal hydroxide can make up for metal ions under acidic conditions to eliminate the shortage of the metal ions, and reacts with the phosphoric acid compound and is incorporated into the crosslinked structure to function as a binder between the metal oxide particles, and thus a coating film having few defects is formed. Therefore, more excellent oxygen barrier properties and water vapor barrier properties can be exhibited in combination with the uniform and dense crosslinked structure described above. As a result, the gas-barrier coating composition of the present invention can provide a gas-barrier laminate which is applicable not only to non-retort applications but also to retort sterilization. In addition, since the reaction between the metal alkoxide, the hydrolysate thereof and the metal hydroxide with the phosphoric acid compound does not cause yellowing, it is possible to form a colorless and transparent gas-barrier coating film. Further, such a coating film can be formed at a low temperature in a short time as compared with a known coating film containing an amine compound and a carboxylic acid, and thus is also excellent in productivity.

Further, the use of zirconium oxide as a metal oxide makes it possible to form a coating film that is stable against acids and alkalis contained in contents, and further excellent oxygen barrier properties and water vapor barrier properties are exhibited.

### Brief Description of Drawings

FIG. 1 is a diagram illustrating a cross-sectional structure of an example of a gas-barrier laminate according to an embodiment of the present invention.
FIG. 2 is a diagram illustrating a cross-sectional structure of another example of a gas-barrier laminate according to an embodiment of the present invention.

### Description of Embodiments

### Gas-Barrier Coating Composition

An important feature of the gas-barrier coating composition according to an embodiment of the present invention is that it contains at least one selected from a metal alkoxide, a hydrolysate of the metal alkoxide, and a metal hydroxide (hereinafter, these three substances are sometimes collectively referred to as "metal alkoxide or the like"), a metal oxide, and a phosphoric acid compound or sulfuric acid compound (hereinafter, these compounds are sometimes collectively referred to as "phosphoric acid compound or the like").

As described above, in an embodiment of the present invention, at least one selected from a metal alkoxide, a hydrolysate of the metal alkoxide and a metal hydroxide is contained together with a metal oxide and a phosphoric acid compound or sulfuric acid compound, whereby a uniform and dense crosslinked structure is formed by the metal oxide and the phosphoric acid compound or the like, and the metal alkoxide or the like reacts with the phosphoric acid compound or the like and is thus incorporated into the crosslinked structure to function as a binder between metal oxide particles, whereby excellent oxygen barrier properties and water vapor barrier properties can be exhibited.

In addition, since the reaction between the metal alkoxide or the like with the phosphoric acid compound or the like does not cause yellowing unlike the coating composition described in Patent Document 3, it is possible to form a colorless and transparent gas-barrier coating film.

### Metal Oxide

The metal oxide used in the gas-barrier coating composition according to an embodiment of the present invention is suitably an oxide of a divalent or higher valent metal atom, and examples thereof include, but are not limited to, oxides of magnesium, calcium, iron, zinc, aluminum, silicon, titanium, and zirconium, and, among them, zirconium oxide can be suitably used.

The metal oxide used in the present specification contains a structure represented by M-O-M as a main component. M represents a metal atom, and O represents an oxygen atom.

Also, the zirconium oxide contains Zr and O as component elements, an amorphous zirconium oxide contains zirconium hydroxide (Zr(OH)₄) and/or zirconyl hydroxide (ZrO(OH)₂) as a main component, and a crystalline zirconium oxide contains as a main component a hydrated zirconium oxide (ZrO₂•xH₂O) and/or zirconium oxide (ZrO₂) as a main component. The "main component" means a component contained in a proportion of 50% or more. The crystallinity of the zirconium oxide and the zirconium oxide formed into a gas-barrier coating film can be evaluated by identifying the X-ray peak inherent in crystalline zirconium using a known X-ray structural diffractometer.

In an embodiment of the present invention, either a crystalline or amorphous zirconium oxide (zirconia) can be used as the zirconium oxide.

In a coating material, zirconium oxide is used in the form of a sol containing zirconium oxide particles as a dispersoid and an inorganic acid such as nitric acid as a stabilizer. However, in an embodiment of the present invention, it is suitable to use a sol of zirconium oxide containing a carbonate salt, an ammonium carbonate salt, an organic dispersant or the like instead of an inorganic acid such as nitric acid, in order to prevent acid volatilization during formation of a coating film due to the incorporation of the inorganic acid.

In addition, at least one selected from a metal alkoxide, a hydrolysate of the metal alkoxide, and a metal hydroxide capable of providing a large amount of hydroxyl groups to be utilized in a reaction with phosphoric acid is contained as a binder component. Therefore, even when a crystalline zirconium oxide is used, both oxygen barrier properties and water vapor barrier properties equivalent to those in the case where an amorphous zirconium oxide having a large amount of hydroxyl groups is used can be provided similarly to the case where an amorphous zirconium oxide is used.

In addition, the zirconium oxide particles desirably have an average particle size (D50) of the primary particle of 100 nm or less, preferably 50 nm or less, and more preferably 30 nm or less, and this can form a uniform coating film with excellent transparency. The average particle size (D50) is a volume average particle size measured by a laser diffraction scattering method, and D50 is a value of 50% in the particle size distribution based on volume. Using such a zirconium oxide in fine particle form as a raw material enables the gas-barrier film to exhibit excellent transparency.

### Phosphoric Acid Compound

Examples of the phosphoric acid compound used in an embodiment of the present invention include orthophosphoric acid, metaphosphoric acid, polyphosphoric acids, phosphorous acid, phosphonic acid, and derivatives thereof. Specific examples of the polyphosphoric acid include pyrophosphoric acid, triphosphoric acid, and polyphosphoric acids in which four or more phosphoric acids are condensed. Examples of the derivatives include salts, (partial) ester compounds, halides (such as chloride), and dehydrates (such as diphosphorus pentoxide) of orthophosphoric acid, metaphosphoric acid, polyphosphoric acids, phosphorous acid and phosphonic acid. In addition, examples of the derivatives of phosphonic acid also include compounds in which a hydrogen atom directly bonded to a phosphorus atom of phosphonic acid (H-P(=O)(OH)₂) is substituted with an alkyl group that may have a functional group of various types (for example, nitrilotris(methylene phosphonic acid) and N,N,N',N'-ethylenediaminetetrakis(methylenephosphonic acid)), and salts, (partial) ester compounds, halides, and dehydrates thereof. Furthermore, an organic polymer having a phosphorus atom, such as a phosphorylated starch, can also be used. These phosphoric acid compounds can be used alone or in combination of two or more.

In an embodiment of the present invention, in particular, at least one selected from orthophosphoric acid, metaphosphoric acid, a polyphosphoric acid, and a cyclic polyphosphoric acid is preferably used.

### Sulfuric Acid Compound

In the present invention, the sulfuric acid compound capable of forming a dense coating film by reacting with a metal oxide, in place of the phosphoric acid compound described above, can be, for example, a compound selected from the group consisting of sulfuric acid, a sulfate salt, a sulfate ester, an alkyl sulfate, a polyoxyethylene alkyl ether sulfate, and salts thereof. These sulfuric acid compounds can be used alone or in combination of two or more.

In an embodiment of the present invention, in particular, sulfuric acid can be suitably used.

### Metal Alkoxide or Hydrolysate Thereof

The metal alkoxide is generally represented by the following Formula (1).

Mⁿ⁺(OR)n⁻ ··· (1)

In the formula, R represents an organic group having from 1 to 8 carbon atoms, M represents a metal atom, and n represents an integer of 1 or more.

In an embodiment of the present invention, the metal atom M in the above-described Formula (1) is suitably any of aluminum, titanium, iron, and zirconium.

In the above-described Formula (1), the organic group R is suitably any of a methyl group, an ethyl group, an n-propyl group, an isopropyl group, an n-butyl group, an isobutyl group, a sec-butyl group, and a tert-butyl group.

In an embodiment of the present invention, the metal alkoxide is suitably at least one metal alkoxide selected from methoxide, ethoxide, propoxide, isopropoxide, butoxide, isobutoxide, sec-butoxide and tert-butoxide, as described above. Among them, aluminum isopropoxide can be suitably used.

### Metal Hydroxide

The metal hydroxide is generally represented by the following Formula (2).

Mⁿ⁺(OH)n⁻ ··· (2)

In the formula, H represents a hydrogen atom, M represents a metal atom, and n represents an integer of 1 or more.

The metal hydroxide is suitably a hydroxide of any of aluminum, titanium, iron, and zirconium exemplified for the metal alkoxide, and among them, aluminum hydroxide can be suitably used.

### Preparation of Coating Composition

The gas-barrier coating composition according to an embodiment of the present invention may be either an aqueous composition or a solvent-based composition as long as it contains the metal oxide, the phosphoric acid compound or the like, and the metal alkoxide or the like described above, but is suitably an aqueous composition.

In the gas-barrier coating composition, a sol containing metal oxide fine particles as a dispersoid is desirably used as the metal oxide. As the sol containing metal oxide fine particles as a dispersoid, it is preferable to use a sol not containing a volatile acid as a stabilizer, in order to suppress an adverse effect on equipment and a working environment due to acid generation.

For the same reason, it is desirable not to use, as a deflocculant, a volatile acid such as nitric acid, hydrochloric acid or acetic acid, which has been used to prepare a dispersion having excellent transparency and viscosity stability.

The gas-barrier coating composition in an embodiment of the present invention is prepared by mixing a metal oxide, a phosphoric acid compound or the like, and a metal alkoxide or the like in a solvent capable of dissolving the phosphoric acid compound or the like and the metal alkoxide or the like.

As such an aqueous medium, a known aqueous solvent, such as distilled water, ion-exchanged water, or pure water, can be used, and the composition can contain an organic solvent like a known aqueous composition, such as alcohols, polyhydric alcohols, and derivatives thereof, and ketones. When such a cosolvent is used, the composition can contain from 1 to 90 mass% of the cosolvent relative to an aqueous solvent in the aqueous composition. The composition containing a solvent in the range described above improves film-forming performance. Such an organic solvent preferably has amphiphilicity, and examples thereof include methyl alcohol, ethyl alcohol, n-propyl alcohol, isopropyl alcohol, n-butyl alcohol, isobutyl alcohol, sec-butyl alcohol, tert-butyl alcohol, butyl cellosolve, propylene glycol monopropyl ether, ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether, 3-methyl-3-methoxybutanol, acetone, and methyl ethyl ketone.

In preparation of the gas-barrier coating composition according to an embodiment of the present invention, a generally known dispersion treatment can be carried out. As a method of the dispersion treatment, fine particle pulverization treatment by cavitation using an ultrasonic homogenizer, mechanical dispersion treatment by a disperser using a rotating blade, and dispersion by a mill using glass or zirconia beads are known. In an embodiment of the present invention, these fine dispersion treatments for the coating material can be suitably used.

In the gas-barrier coating composition according to an embodiment of the present invention, the phosphoric acid compound or the like and the metal alkoxide or the like can be added to the metal oxide as long as neither the oxygen barrier properties nor the water vapor barrier properties are impaired.

The amount of the phosphoric acid compound or the like to be added varies depending on the type of the phosphoric acid compound or the like to be used, and may not be specified unconditionally. However, when zirconium oxide is used as the metal oxide, phosphoric acid is used as the phosphoric acid compound or the like, and aluminum isopropoxide is used as the metal alkoxide or the like, the phosphoric acid compound or the like is suitably blended in an amount of from 53 to 86 parts by mass, particularly from 53 to 64 parts by mass, in terms of a nonvolatile content of phosphoric acid, relative to 100 parts by mass of a solid content of the zirconium oxide.

The amount of the metal alkoxide or the like to be added varies depending on the type of the metal alkoxide or the like to be used, and may not be specified unconditionally. However, when zirconium oxide is used as the metal oxide, phosphoric acid is used as the phosphoric acid compound or the like, and aluminum isopropoxide is used as the metal alkoxide or the like, the aluminum isopropoxide is suitably added in an amount of from 45 to 49 parts by mass, relative to 100 parts by mass of the solid content of the zirconium oxide.

When the added amount is less than the range described above, the action and effect achieved by adding the metal alkoxide or the like cannot be sufficient as compared with the case where the added amount is in the range described above, and, even when the added amount is more than the range described above, a further effect cannot be achieved, and, besides, there is a possibility that a defect is generated in the barrier structure of the coating film as compared with the case where the added amount is in the range described above.

The gas-barrier coating composition according to an embodiment of the present invention suitably contains a catalyst capable of promoting the reaction between the metal oxide or metal alkoxide or the like to be used and the phosphoric acid compound or the like. This can promote the crosslinking reaction of the coating composition and reduce the heating temperature and heating time for forming the coating film.

Examples of such a catalyst include acid catalysts such as para-toluenesulfonic acid, dodecylbenzenesulfonic acid, dinonylnaphthalenesulfonic acid, dinonylnaphthalenedisulfonic acid and cumenesulfonic acid, and amine-neutralized products of these acids, and among them, para-toluenesulfonic acid can be suitably used.

The acid catalyst is suitably contained in an amount of from 0.1 to 10 parts by mass, particularly from 1 to 3 parts by mass, relative to 100 parts by mass of the solid content of the zirconium oxide.

In addition to the above-described components, the gas-barrier coating composition can also contain a crosslinking agent, a metal complex, a condensation accelerator, a macromolecular compound, a filler, a plasticizer, an antioxidant, an ultraviolet absorber, a flame retardant, an antifoaming agent, a colorant, or the like.

### Gas-Barrier Coating Film

The gas-barrier coating film formed from the gas-barrier coating composition according to an embodiment of the present invention includes the metal oxide, the phosphoric acid compound or the like and the metal alkoxide or the like described above. Specifically, a metal phosphate salt is formed, and the metal oxide and the phosphoric acid compound are crosslinked, whereby a dense crosslinked structure can be formed. In addition, the metal alkoxide or the like reacts with phosphoric acid to form a metal phosphate salt, which is taken into the crosslinked structure and functions as a binder between the metal oxide particles, whereby a defect-free coating film can be formed.

The coating film including the gas-barrier coating composition according to an embodiment of the present invention is characterized by having an absorption peak at which infrared absorption reaches maximum in a range of from 800 to 1400 cm⁻¹ in an infrared absorption spectrum in a range of from 940 to 1120 cm⁻¹ as measured by FT-IR measurement of the coating film alone.

In the gas-barrier coating film according to an embodiment of the present invention, yellowing as in the case of using a polyamidation reaction with an amine compound and a carboxylic acid is not caused, and a coating film formed on a biaxially stretched PET film having a thickness of 12 µm in an applied amount of 2.0 g/m² has a b* value of less than 2.2, particularly less than 1.5 in color measurement (L*a*b* color system defined by CIE1976) and has a reduced degree of yellowness.

In the coating film including the gas-barrier coating composition according to an embodiment of the present invention, a value of a content ratio (P/M) between M(M-kα) of the metal oxide, the metal alkoxide, or the like by X-ray fluorescence measurement and P(P-kα) of the phosphoric acid compound or the like by X-ray fluorescence measurement, in particular, when zirconium oxide is used as the metal oxide, phosphoric acid is used as the phosphoric acid compound or the like, and aluminum isopropoxide is used as the metal alkoxide or the like, a value of a content ratio (P/Zr) between Zr(Zr-kα) of the zirconium oxide by X-ray fluorescence measurement and P(P-kα) of the phosphoric acid compound by X-ray fluorescence measurement, is suitably in a range from 1.30 to 1.82, particularly in a range from 1.36 to 1.82.

With the content ratio in the ranges described above, the phosphoric acid compound efficiently reacts, without excess or deficiency, with the hydroxyl groups of the metal oxide in the coating film, which enables a uniform and dense coating film to be formed and excellent oxygen barrier properties and water vapor barrier properties to be exhibited. That is, if the content ratio by X-ray fluorescence measurement is smaller than the ranges described above, meaning the phosphoric acid compound is deficient, bonding between the metal oxide particles would be insufficient, the amount of hydroxyl groups present on the surface of the metal oxide particles would increase, and this may reduce the oxygen barrier properties and water vapor barrier properties. On the other hand, if the content ratio by X-ray fluorescence measurement is greater than the ranges described above and the phosphoric acid compound is in excess, the amount of hydroxyl groups derived from phosphate groups would increase, and this may also reduce the oxygen barrier properties and water vapor barrier properties.

When zirconium oxide is used as the metal oxide, phosphoric acid is used as the phosphoric acid compound or the like, and aluminum isopropoxide is used as the metal alkoxide or the like, a value of a content ratio (Al/Zr) between Zr(Zr-kα) of the zirconium oxide by X-ray fluorescence measurement and Al(Al-kα) of the aluminum isopropoxide by X-ray fluorescence measurement is suitably in a range from 0.06 to 0.35, particularly in a range from 0.13 to 0.26. With the content ratio in the ranges described above, the above-described action and effect due to the metal alkoxide or the like can be exhibited without impairing the dense crosslinked structure of the zirconium oxide and the phosphoric acid compound, and excellent oxygen barrier properties and water vapor barrier properties can be exhibited.

### Gas-Barrier Laminate

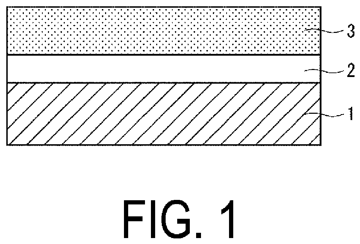

A gas-barrier laminate according to an embodiment of the present invention is a laminate in which the gas-barrier layer including the gas-barrier coating film described above is formed on at least one surface of a base material, and suitably, as illustrated in FIG. 1, a gas-barrier layer 3 is formed on a base material 1 via an anchor coat layer 2 described below. The anchor coat layer 2 is a coating film with excellent adhesion to a plastic base material 1; forming the gas-barrier layer on this coating film significantly improves interlayer adhesion between the gas-barrier layer and the plastic base material and can effectively prevent peeling of the gas-barrier layer from the base material also when the gas-barrier laminate is subjected to retort sterilization.

In addition, the gas-barrier laminate of the above-described configuration has excellent transparency with a total light transmittance of 80% or more and a haze of 30% or less.

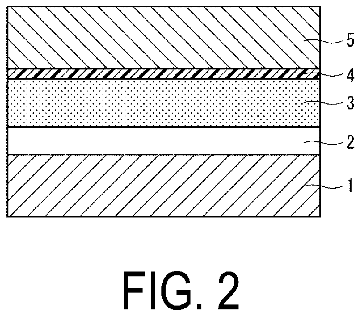

In addition, in the gas-barrier laminate according to an embodiment of the present invention, as illustrated in FIG. 2, a moisture-resistant resin layer 5 including a thermoplastic resin, such as a non-stretched polypropylene resin film, is suitably formed on the gas-barrier layer 3 via an adhesive layer 4.

The gas-barrier laminate according to an embodiment of the present invention includes a gas-barrier layer itself having sufficient gas-barrier performance, particularly oxygen barrier properties and water vapor barrier properties, and has excellent oxygen barrier properties and retort resistance with an oxygen transmission rate (in accordance with JIS K-7126) of 25 cc/m²•day•atm (40°C, 90% RH) or less and a water vapor transmission rate of 5.5 g/m²•day (40°C, 90% RH) or less in the case where the gas-barrier laminate includes a base material film containing a biaxially stretched polyester with a thickness of 12 µm, the gas-barrier coating film (gas-barrier layer) in an applied amount of 2.0 g/m², an adhesive layer, and a non-stretched polypropylene film with a thickness of 50 µm.

### Base material

For the base material of the gas-barrier laminate, a base material known in the art containing a resin, such as a thermoplastic resin or a thermosetting resin; paper; or a fiber, such as a non-woven fabric, can be used, but suitably, examples can include films; sheets; or any packaging materials in a shape, such as a bottle, a cup, a tray, or a can; manufactured from a thermoformable thermoplastic resin by means, such as extrusion molding, biaxially stretching film molding, cast film molding, injection molding, blow molding, stretch blow molding, or press molding.

Examples of the thermoplastic resin forming the base material may be exemplified by: olefin-based copolymers, such as low-, medium-, or high-density polyethylenes, linear low-density polyethylenes, polypropylenes, ethylene-propylene copolymers, ethylene-1-butene copolymers, ionomers, ethylene-vinyl acetate copolymers, and ethylene-vinyl alcohol copolymers; polyesters, such as polyethylene terephthalates, polybutylene terephthalates, polyethylene terephthalates/isophthalates, and polyethylene naphthalates; polyamides, such as nylon 6, nylon 6,6, nylon 6,10, and meta-xylylene adipamide; styrene-based copolymers, such as polystyrenes, styrene-butadiene block copolymers, styrene-acrylonitrile copolymers, and styrene-butadiene-acrylonitrile copolymers (ABS resins); vinyl chloride-based copolymers, such as polyvinyl chlorides and vinyl chloride-vinyl acetate copolymers; acrylic-based copolymers, such as poly(methyl methacrylate)s and methyl methacrylate-ethyl acrylate copolymers; and polycarbonates.

From the viewpoint of environmental compatibility in recent years, chemically recycled polyethylene terephthalate, mechanically recycled polyethylene terephthalate, biomass-derived polyethylene terephthalate, biomass-derived olefin, recycled olefin, and the like can be used.

In an embodiment of the present invention, in particular, a sheet composed of a polyethylene terephthalate, a polybutylene terephthalate, or a polypropylene can be suitably used.

These thermoplastic resins may be used alone or may be present in the form of a blend of two or more, or different resins may be present in the form of a laminate. **In** addition, the plastic base material may have a single-layer configuration or a laminate configuration of two or more layers, for example, by simultaneous melt extrusion or other laminations.

To the melt-formable thermoplastic resin can be added as desired, one, or two or more of additives, such as a pigment, an antioxidant, an antistatic agent, an ultraviolet absorber, or a lubricant, in a total amount within a range of from 0.001 to 5.0 parts by mass relative to 100 parts by mass of a resin.

Furthermore, for example, to reinforce this container, one, or two or more of a fiber reinforcing material, such as a glass fiber, an aromatic polyamide fiber, a carbon fiber, a pulp, or a cotton linter; or a powder reinforcing material, such as a carbon black or white carbon; or a flake reinforcing material, such as a glass flake or an aluminum flake; can be blended in a total amount of from 2 to 150 parts by mass relative to 100 parts by mass of the thermoplastic resin. Moreover, for the purpose of increasing the volume, one, or two or more of a heavy or soft calcium carbonate, mica, talc, kaolin, gypsum, clay, barium sulfate, an alumina powder, a silica powder, magnesium carbonate, or the like can be blended according to a formulation known per se in a total amount of from 5 to 100 parts by mass relative to 100 parts by mass of the thermoplastic resin.

Still more, for the purpose of improving the gas-barrier properties, a scaly inorganic fine powder, such as, for example, water-swelling mica or clay, may be blended according to a formulation known per se in a total amount of from 5 to 100 parts by mass relative to 100 parts by mass of the thermoplastic resin without any limitation.

Similarly, for the purpose of improving the gas-barrier properties, an inorganic-based thin film layer of, for example, silicon oxide or aluminum oxide may be provided on the plastic base material physically or chemically using a vapor deposition method without any limitation.

In addition, the base material may be a molded product, such as a final film, sheet, or container, or this coating can also be provided in advance to a preformed product to be formed into a container. Examples of such a preformed body can include bottomed or bottomless tubular parisons for biaxial stretch blow molding, pipes for plastic container molding, sheets for vacuum forming, pressure forming, and plug-assist forming, or films for heat seal lids or bag making.

### Anchor Coat Layer

As the anchor coat layer formed on the base material surface as necessary, an anchor coat layer used in the gas-barrier laminate can be used, and an anchor coat layer including a known polyurethane-based resin formed by combining a hydroxyl group-containing compound serving as a main component such as an acrylic resin or a polyol and an isocyanate-based curing agent, an anchor coat layer formed by further blending a silane coupling agent, or an anchor coat layer including a hydrophilic group-containing resin and a silane coupling agent can be suitably used.

### Polyurethane-Based Resin

As the polyurethane-based resin forming the anchor coat layer, it is possible to use a polyurethane-based resin including a hydroxyl group-containing compound serving as a main component such as a known acrylic resin or a polyol which has been used as an anchor coat layer, and an isocyanate compound.

In an embodiment of the present invention, it is desirable to use a polyurethane-based resin having a glass transition temperature (Tg) of 80°C or higher, particularly in a range from 80 to 120°C. When the polyurethane-based resin has a glass transition temperature lower than the range described above, the anchor coat layer would have poor heat resistance as compared with that when the polyurethane-based resin has a glass transition temperature in the range described above, and the gas-barrier layer would have a crack when the gas-barrier coating film shrinks due to heating during drying of the gas-barrier layer, and this may reduce the barrier properties.

As the acrylic resin, a polymer and a copolymer synthesized by solution polymerization or suspension polymerization using a known radical initiator or the like can be used.

The glass transition temperature of the acrylic resin is preferably from -50 to 100°C and more preferably from 40°C to 100°C. In addition, the number average molecular weight of the acrylic resin is preferably from 50 to 100000 and more preferably from 50 to 80000. The hydroxyl value of the acrylic resin is preferably from 10 to 200 mgKOH/g, and more preferably from 80 to 180 mgKOH/g.

Examples of a monomer for forming the copolymer include, but are not particularly limited, methyl acrylate, ethyl acrylate, methyl methacrylate, ethyl methacrylate, acrylic acid, methacrylic acid, itaconic acid, maleic acid, 2-hydroxyethyl methacrylate, tert-butyl acrylate and the like, and they can be used to combine as necessary for forming the copolymer.

The polyol can be exemplified by glycols, polyester polyols, polyether polyols, acrylic polyols, or their urethane-modified products, but, in particular, acrylic polyols or glycols are preferably used.

The glass transition temperature of the polyester polyol is preferably from -50 to 100°C and more preferably from -20°C to 80°C. In addition, the number average molecular weight of these polyester polyols is preferably from 50 to 100000 and more preferably from 50 to 80000.

Examples of the glycol include ethylene glycol, propylene glycol, diethylene glycol, butylene glycol, neopentyl glycol, and 1,6-hexanediol.

For the isocyanate component, which is a curing agent for the polyurethane-based resin, an aromatic diisocyanate, an aromatic-aliphatic diisocyanate, an alicyclic diisocyanate, an aliphatic diisocyanate, or the like can be used.

The aromatic diisocyanate can be exemplified by a tolylene diisocyanate (2,4- or 2,6-tolylene diisocyanate, or their mixtures) (TDI), a phenylene diisocyanate (m-, p-phenylene diisocyanate or their mixtures), 4,4'-diphenyl diisocyanate, 1,5-naphthalene diisocyanate (NDI), a diphenylmethane diisocyanate (4,4'-, 2,4'-, or 2,2'-diphenylmethane diisocyanate, or their mixtures) (MDI), 4,4'-toluidine diisocyanate (TODI), and 4,4'-diphenyl ether diisocyanate.

The aromatic aliphatic diisocyanate can be exemplified by a xylene diisocyanate (1,3- or 1,4-xylene diisocyanate, or their mixtures) (XDI), a tetramethylxylene diisocyanate (1,3- or 1,4-tetramethylxylene diisocyanate, or their mixtures) (TMXDI), and ω,ω'-diisocyanate-1,4-diethylbenzene.

Examples of the alicyclic diisocyanate can include 1,3-cyclopentene diisocyanate, a cyclohexane diisocyanate (1,4-cyclohexane diisocyanate or 1,3-cyclohexane diisocyanate), 3-isocyanatomethyl-3,5,5-trimethylcyclohexyl isocyanate (isophorone diisocyanate, IPDI), a methylene bis(cyclohexyl isocyanate) (4,4'-, 2,4'-, or 2,2'-methylene bis(cyclohexyl isocyanate)) (hydrogenated MDI), a methylcyclohexane diisocyanate (methyl-2,4-cyclohexane diisocyanate or methyl-2,6-cyclohexane diisocyanate), and a bis(isocyanatomethyl)cyclohexane (1,3- or 1,4-bis(isocyanatomethyl)cyclohexane, or their mixtures) (hydrogenated XDI).

Examples of the aliphatic diisocyanate can include trimethylene diisocyanate, 1,2-propylene diisocyanate, butylene diisocyanate (tetramethylene diisocyanate, 1,2-butylene diisocyanate, 2,3-butylene diisocyanate, or 1,3-butylene diisocyanate), hexamethylene diisocyanate, pentamethylene diisocyanate, 2,4,4- or 2,2,4-trimethylhexamethylene diisocyanate, and 2,6-diisocianatomethyl caffeate.

The polyisocyanate component that can also be used include: a polyfunctional polyisocyanate compound, such as isocyanurate, biuret, or allophanate, derived from the polyisocyanate monomer; or a polyfunctional polyisocyanate compound containing a terminal isocyanate group obtained by a reaction with a trifunctional or higher polyol compound, such as trimethylolpropane or glycerin.

The polyisocyanate component preferably has a glass transition temperature (Tg) of 50°C or higher and a number average molecular weight (Mn) of 400 or more, and in particular, a glass transition temperature (Tg) of 60°C or higher and a number average molecular weight (Mn) of 500 or more.

In an embodiment of the present invention, among the above-described isocyanate components, a xylene diisocyanate is suitably used.

### Hydrophilic Group-Containing Resin

Examples of the hydrophilic group-containing resin include, but are not limited to, a water-dispersible or water-soluble polyester resin, a water-dispersible or water-soluble acrylic resin, and a water-dispersible or water-soluble polyurethane resin. In an embodiment of the present invention, the hydrophilic group-containing resin is suitably a polyester resin, and particularly suitably a carboxyl group-containing polyester resin.

The carboxyl group-containing polyester resin can be prepared by combining a carboxylic acid anhydride such as phthalic anhydride, succinic anhydride, maleic anhydride, trimellitic anhydride, itaconic anhydride, or citraconic anhydride with a monomer component usually used in polymerization of a polyester resin.

Examples of a polyvalent carboxylic acid component as such a monomer component include: aromatic dicarboxylic acids such as terephthalic acid, isophthalic acid, orthophthalic acid, and naphthalenedicarboxylic acid; aliphatic dicarboxylic acids such as succinic acid, glutaric acid, adipic acid, azelaic acid, sebacic acid, dodecanedioic acid, and dimer acid; unsaturated dicarboxylic acids such as maleic acid (maleic anhydride), fumaric acid, and terpene-maleic adducts; alicyclic dicarboxylic acids such as 1,4-cyclohexanedicarboxylic acid, tetrahydrophthalic acid, hexahydroisophthalic acid, and 1,2-cyclohexenedicarboxylic acid; and trivalent or higher valent carboxylic acids such as trimellitic acid (trimellitic anhydride), pyromellitic acid (pyromellitic anhydride), and methylcyclohexenetricarboxylic acid. From these, one, or two or more can be selected and used. In an embodiment of the present invention, from the viewpoint of heat resistance and the like, the proportion of an aromatic dicarboxylic acid such as terephthalic acid, isophthalic acid, or naphthalenedicarboxylic acid in the polyvalent carboxylic acid component constituting the polyester resin is preferably 50 mol% or more.

The polyhydric alcohol component constituting the polyester resin is not particularly limited, and one or a combination of two or more of aliphatic glycols such ethylene glycol, propylene glycol (1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl -1,7-heptanediol, 4-methyl-1,8-octanediol, 4-propyl-1,8-octanediol, and 1,9-nonanediol; ether glycols such as diethylene glycol, triethylene glycol, polyethylene glycol, polypropylene glycol, and polytetramethylene glycol; alicyclic polyalcohols such as 1,4-cyclohexanedimethanol, 1,3-cyclohexanedimethanol, 1,2-cyclohexanedimethanol, tricyclodecane glycols, and water-added bisphenols; and trihydric or higher polyalcohols such as trimethylolpropane, trimethylolethane, and pentaerythritol can be used. In an embodiment of the present invention, among the polyhydric alcohol components described above, ethylene glycol, propylene glycol, and neopentyl glycol can be suitably used.

The carboxyl group-containing polyester resin can be produced by a known method such as polycondensation of one or more types of the polyvalent carboxylic acid components described above and one or more types of the polyhydric alcohol components described above, a method of depolymerization after polycondensation with a polyvalent carboxylic acid component such as terephthalic acid, isophthalic acid, trimellitic anhydride, trimellitic acid, or pyromellitic acid, or ring-opening addition of an acid anhydride such as phthalic anhydride, maleic anhydride, trimellitic anhydride, or ethylene glycol bis-trimellitate dianhydride after polycondensation.

The carboxyl group-containing polyester resin suitably has an acid value of from 1 to 80 KOHmg/g, particularly from 10 to 30 KOHmg/g, and a glass transition temperature (Tg) of from 0 to 120°C, particularly from 67 to 80°C.

The carboxyl group-containing polyester resin to be used may be a blended polyester resin as long as the acid value and Tg after blending are within the above-mentioned ranges.

The carboxyl group-containing polyester resin is suitably an amorphous polyester.

### Silane Coupling Agent

For the silane coupling agent used in the anchor coat layer, an epoxy-based silane coupling agent can be suitably used.

Such an epoxy-based silane coupling agent that can be used include β-(3,4-epoxycyclohexyl)ethyltrimethoxysilane, 3-glycidoxypropylmethyldimethoxysilane, 3-glycidoxypropylmethyldiethoxysilane, 3-glycidoxypropyltriethoxysilane, and 3-glycidoxypropyltrimethoxysilane.

Other examples of the silane coupling agent include tetramethoxysilane, tetraethoxysilane, 3-aminopropyltrimethoxysilane, 3-aminopropyltriethoxysilane, and 3-isocyanatopropyltriethoxysilane, which can be used as necessary.

In addition, for the purpose of improving hot water resistant adhesion, these silane coupling agents can be subjected to hydrolysis to allow the condensation reaction to proceed. Such silane coupling agents may be used.

### Composition for Forming Anchor Coat Layer

In an embodiment of the present invention, the composition for forming an anchor coat layer may be either a water-based or solvent-based composition; however, the composition is desirably an aqueous composition from the perspective of the working environment.

When the above-described polyurethane-based resin is used in the composition for forming an anchor coat layer, the composition suitably further contains an epoxy-based silane coupling agent. The polyurethane-based resin to be used is desirably a water-soluble or water-dispersible polyurethane.

On the other hand, when the above-described hydrophilic group-containing resin is used in the composition for forming an anchor coat layer, the composition prepared desirably contains, especially, a carboxyl group-containing polyester resin and an epoxy-based silane coupling agent.

The epoxy-based silane coupling agent is preferably contained in an amount of from 1 to 80 parts by mass relative to 100 parts by mass of a solid content of the polyurethane-based resin, and, on the other hand, is suitably blended in an amount of from 100 to 400 parts by mass, particularly from 150 to 300 parts by mass relative to 100 parts by mass of a solid content of the carboxyl group-containing polyester resin.

When the amount of the epoxy-based silane coupling agent is smaller than the ranges described above, crack resistance during drying cannot be satisfactorily obtained as compared with the case where the amount falls within the ranges described above. On the other hand, even if the blending amount of the epoxy-based silane coupling agent is larger than the above-mentioned range, it is difficult to further improve the adhesion and crack resistance, and there is a possibility that hot water resistance is rather impaired, and the composition is also inferior from the viewpoint of economic efficiency.

In addition, for an aqueous medium, the composition for forming an anchor coat layer can contain an aqueous medium known in the art or an organic solvent, such as an alcohol, a polyhydric alcohol, or a derivative of them, which are similar to those used in the composition for forming a gas-barrier layer.

In addition to the above-described components, the composition for forming an anchor coat layer may contain a known component, such as a curing accelerator catalyst; a filler; a softener; an anti-aging agent; a stabilizer; an adhesion promoter; a leveling agent; an antifoaming agent; a plasticizer; an inorganic filler; a tackifying resin; a fiber; a colorant, such as a pigment; or a pot life extender.

### Method of Manufacturing Gas-Barrier Laminate

In a method of manufacturing a gas-barrier laminate according to an embodiment of the present invention, the gas-barrier coating composition according to an embodiment of the present invention can be applied directly to at least one surface of the base material described above, but preferably, the composition for forming an anchor coat layer is applied prior to applying the gas-barrier coating composition.

The amount of the composition for forming an anchor coat layer applied is determined according to the contents of the polyurethane-based resin or carboxyl group-containing polyester resin and the silane coupling agent in the composition and may not be specified unconditionally, but the composition is preferably applied to be in a range from 0.05 to 1.00 g/m² and particularly from 0.10 to 0.50 g/m² based on a solid content weight of the coating film. The anchor coat applied in an amount less than the ranges described above may fail to adhere the anchor coat layer to the base material compared to the anchor coat applied in an amount in the ranges described above; on the other hand, the anchor coat applied in an amount greater than the ranges described above would reduce economic efficiency.

The composition for forming an anchor coat layer applied onto the base material is dried at a temperature from 80 to 150°C for from 1 to 60 seconds to remove a solvent in the composition although the conditions depend on the composition to be used and the applied amount. This enables the anchor coat layer to be formed economically without affecting the base material even if the base material includes a plastic with a low melting point, such as a polypropylene.

The gas-barrier coating composition is then applied onto the composition for forming an anchor coat layer in a dry state after the solvent removal. The amount of the gas-barrier coating composition applied is determined according to the contents of the metal oxide, the phosphoric acid compound or the like and the metal alkoxide or the like in the composition and may not be specified unconditionally, but the composition is preferably applied to be in a range from 0.05 to 3.0 g/m² and particularly from 0.1 to 2.0 g/m² based on a solid content weight of the coating film. The composition applied in an amount less than the ranges described above would fail to provide sufficient barrier properties. On the other hand, the composition applied in an amount greater than the ranges described above would only reduce economic efficiency but provide no special advantage.

In the gas-barrier coating composition according to an embodiment of the present invention, the gas-barrier layer can be formed by heating at a temperature of from 80 to 220°C, suitably from 140 to 220°C, for from 1 second to 10 minutes, although the conditions depend on the compositions of the metal oxide, the phosphoric acid compound or the like and the metal alkoxide or the like in the composition to be used and the applied amount. This reduces a difference in contraction due to heating of the gas-barrier layer and the anchor coat layer and can improve the cracking resistance of the gas-barrier layer as well as significantly improve the interlayer adhesion between the gas-barrier layer and the anchor coat layer, and prevents peeling of the gas-barrier layer from the base material also when the gas-barrier laminate is subjected to retort sterilization. Further, the coating film can be efficiently formed at a low temperature and in a short time as compared with a known gas-barrier layer.

The application and drying or heating of the composition for forming an anchor coat layer and the gas-barrier coating composition can be performed by methods known in the art.

The application method is not limited to the following, but the compositions can be applied, for example, by spray coating, immersion, or a bar coater, a roll coater, or a gravure coater.

In addition, the drying or heating can be performed by oven drying (heating), infrared heating, high-frequency heating, vacuum drying, superheated steam, or the like.

### Examples

The present invention will be further described by the following examples, but the present invention is not limited in any way by the following examples. Various measurement methods and evaluation methods of the Examples and Comparative Examples are as follows.

### Example 1

### Preparation of Gas-Barrier Coating Composition

As metal oxide as the gas-barrier coating composition (hereinafter may be referred to as "barrier coat coating material"), a zirconium oxide sol (available from Daiichi Kigenso Kagaku Kogyo Co., Ltd., zirconia sol ZSL-00120B (crystalline zirconium oxide, tetragonal crystal system, solid content (in terms of ZrO₂) = 20%) was used. First, the zirconium oxide sol was prepared using water and an isopropanol solvent so as to attain a solid content of 6.9% and a water/isopropanol ratio of 80/20. Next, relative to 100 parts by mass of the solid content of the zirconium oxide sol, 8.5 parts by mass of aluminum hydroxide (available from Wako Pure Chemical Industries, Ltd.) and 53.5 parts by mass of phosphoric acid (available from Wako Pure Chemical Industries, Ltd., concentration = 75%), as a phosphoric acid compound, in terms of the nonvolatile content of phosphoric acid were added as additives, and stirred for a predetermined time, and a barrier coat coating material was produced.

### Method of Producing Gas-Barrier Laminate

A gas-barrier laminate was produced as follows using the prepared barrier coat coating material. The barrier coat coating material described above was applied onto a base material of a biaxially stretched polyester film with a thickness of 12 µm (Lumirror P60, available from Toray Advanced Film Co., Ltd.) using a bar coater so that the applied amount was 2.0 g/m², and heat-dried at a temperature of 200°C for 2 minutes in a box oven, and a gas-barrier laminate was produced.

### Method of Producing Sample for Evaluation of Gas-Barrier Properties and the Like

A sample for evaluation of gas-barrier properties and the like (hereinafter referred to as "sample for evaluation") was produced by applying a urethane-based adhesive (TAKENATE A-315/TAKENATE A-50, available from Mitsui Chemicals, Inc.) onto a barrier coat surface of the gas-barrier laminate described above in an applied amount of 4.0 g/m² using a bar coater, drying it using a dryer, and then laminating a non-stretched polypropylene film with a thickness of 50 µm (TORAYFAN ZK401, available from Toray Advanced Film Co., Ltd.), and a sample for evaluation of gas-barrier properties was produced.

### Example 2

A gas-barrier laminate and a sample for evaluation were obtained in the same manner as in Example 1, except that, in Example 1, relative to 100 parts by mass of the solid content of the zirconium oxide sol, 4.4 parts by mass of aluminum hydroxide (available from Wako Pure Chemical Industries, Ltd.) and 53.3 parts by mass of phosphoric acid (available from Wako Pure Chemical Industries, Ltd., concentration = 75%), as a phosphoric acid compound, in terms of the nonvolatile content of phosphoric acid were added as additives, and that the barrier coat coating material was applied onto the base material, and then heat-dried at 220°C for 2 minutes in a box oven.

### Example 3

A gas-barrier laminate and a sample for evaluation were obtained in the same manner as in Example 1, except that, in Example 1, the barrier coat coating material was applied onto the base material and then heat-dried at a temperature of 220°C for 10 minutes in a box oven.

### Example 4

As a barrier coat coating material, the zirconium oxide sol was prepared using water and an isopropanol solvent so as to attain a solid content of 3.7% and a water/isopropanol ratio of 60/40. Next, relative to 100 parts by mass of the solid content of the zirconium oxide sol, 44.7 parts by mass of aluminum isopropoxide (available from Wako Pure Chemical Industries, Ltd.) and 53.5 parts by mass of phosphoric acid (available from Wako Pure Chemical Industries, Ltd., concentration = 75%), as a phosphoric acid compound, in terms of the nonvolatile content of phosphoric acid were added as additives, and stirred for a predetermined time, and a barrier coat coating material was produced.

A gas-barrier laminate and a sample for evaluation were obtained in the same manner as in Example 1, except that the barrier coat coating material was applied onto the base material, and then heat-dried at a temperature of 180°C for 2 minutes in a box oven.

### Example 5

A gas-barrier laminate and a sample for evaluation were obtained in the same manner as in Example 1, except that, in Example 4, relative to 100 parts by mass of the solid content of the zirconium oxide sol, 48.9 parts by mass of aluminum isopropoxide (available from Wako Pure Chemical Industries, Ltd.) and 53.3 parts by mass of phosphoric acid (available from Wako Pure Chemical Industries, Ltd., concentration = 75%), as a phosphoric acid compound, in terms of the nonvolatile content of phosphoric acid were added as additives, and that the barrier coat coating material was applied onto the base material, and then heat-dried at 220°C for 2 minutes in a box oven.

### Example 6

A gas-barrier laminate and a sample for evaluation were obtained in the same manner as in Example 5, except that, in Example 5, relative to 100 parts by mass of the solid content of the zirconium oxide sol, 44.6 parts by mass of aluminum isopropoxide (available from Wako Pure Chemical Industries, Ltd.) and 63.9 parts by mass of phosphoric acid (available from Wako Pure Chemical Industries, Ltd., concentration = 75%), as a phosphoric acid compound, in terms of the nonvolatile content of phosphoric acid were added as additives.

### Example 7

A gas-barrier laminate and a sample for evaluation were obtained in the same manner as in Example 4, except that, in Example 4, heat-drying were performed at a temperature of 220°C for 10 minutes in a box oven.

### Comparative Example 1

A gas-barrier laminate and a sample for evaluation were obtained in the same manner as in Example 3 except that, in Example 3, aluminum hydroxide was not blended as an additive.

### Comparative Example 2

As a barrier coat coating material, the zirconium oxide sol was prepared using water and an isopropanol solvent so as to attain a solid content of 6.9% and a water/isopropanol ratio of 80/20. Next, relative to 100 parts by mass of the solid content of the zirconium oxide sol, 29.3 parts by mass of aluminum glycinate (available from Tokyo Chemical Industry Co., Ltd.) and 52.0 parts by mass of phosphoric acid (available from Wako Pure Chemical Industries, Ltd., concentration = 75%), as a phosphoric acid compound, in terms of the nonvolatile content of phosphoric acid were added as additives, and stirred for a predetermined time, and a barrier coat coating material was produced.

A gas-barrier laminate and a sample for evaluation were obtained in the same manner as in Example 1, except that the barrier coat coating material was applied onto the base material, and then heat-dried at a temperature of 180°C for 2 minutes in a box oven.

### Comparative Example 3

A gas-barrier laminate and a sample for evaluation were obtained in the same manner as in Comparative Example 2, except that, in Comparative Example 2, heat-drying were performed at a temperature of 220°C for 10 minutes in a box oven.

### Evaluation method

Evaluation results of the gas-barrier laminates and the samples for evaluation were obtained as shown in Tables 1 and 2 using the following evaluation methods.

### Oxygen Transmission Rate

Each of the samples for evaluation produced in Examples and Comparative Examples was measured using an oxygen transmission rate measuring device (OX-TRAN2/21, available from Modern Control Inc.). The measurement conditions were set at a temperature of 40°C and a relative humidity of 90%.

### Water Vapor Transmission Rate

Each of the samples for evaluation of gas-barrier properties produced in Examples and Comparative Examples was measured using a water vapor transmission rate measuring device (PERMATRAN-W 3/31, available from Modern Control Inc.). The measurement conditions were set at a temperature of 40°C and a relative humidity of 90%.

### Infrared Absorption Spectrum

For each of the gas-barrier laminates produced in Examples and Comparative Examples, the infrared absorption spectrum of the gas-barrier coating film applied onto the polyester base material was measured using a Fourier transform infrared spectrophotometer (FT/IR-6600, available from JASCO Corporation).

### <FT-IR Spectrometer Measurement Conditions>

| | |
|---|---|
| Apparatus used: | FT/IR-6600 available from JASCO |
| Measurement conditions: | Method ATR (Ge prism) |
| | Detector TGS |
| | Attachment Thunder Dome |
| | Wave number range from 800 to 1400 cm⁻¹ |
| | Film measurement surface Barrier coating film surface |

### Optical properties

For each of the gas-barrier laminates obtained in Examples and Comparative Examples, the total light transmittance (%) and the haze (%) were measured using a color computer (SM-4 manufactured by Suga Test Instruments Co., Ltd.) with the detector side of the measurement being the polyester film base material side.

### Color Measurement

For each of the gas-barrier laminates obtained in Examples and Comparative Examples, the degree of yellowness (b* value) in color measurement (L*a*b* color system defined by CIE1976) was measured using a color computer (SM-4 manufactured by Suga Test Instruments Co., Ltd.) with the detector side of the measurement being the polyester film base material side.

### X-ray Fluorescence Evaluation

As a method for evaluating a metal element contained in each of the gas-barrier laminates produced in Examples and Comparative Examples, the phosphorus element, the aluminum element and the zirconium element can be quantified by a commercially available X-ray fluorescence analyzer. The net intensity obtained in the measurement of each of the gas-barrier laminates was used to calculate content ratios between the respective elements in the coating film for P and Zr as P/Zr and Al and Zr as Al/Zr, which was used for evaluation.

### <X-ray Fluorescence Analyzer Measurement Condition>

| | |
|---|---|
| Apparatus used: | ZSX PrimusII available from Rigaku Corporation |
| Measurement condition: | Measurement target P-Kα ray, Al-Kα ray, Zr-Kα ray |
| | Measurement diameter 10 mm |
| | Measurement X-ray Rh (4.0 kw) |
| Film measurement surface | Measured by injecting X-ray from barrier coating film surface side |

Various measurement and evaluation results of the above-described Examples and Comparative Examples are shown in Table 1 and Table 2.

**[Table 1]**

| Sample | Metal oxide | | Additive | | Additive | | Applied amount | Drying time |
|---|---|---|---|---|---|---|---|---|
| | (NV = 20%) | | Aluminum compound | | Phosphoric acid compound | | | |
| | Type | Added amount | Type | Added amount | Type | Added amount | (g/m²) | (°C-min) |
| | | (g) | | (g) | | (g) | | |
| Example 1 | ZSL-00120B | 137.5 | Aluminum hydroxide | 2.4 | 75% Phosphoric acid | 19.6 | 1.9 | 200-2 |
| Example 2 | ↓ | ↓ | ↓ | 1.2 | ↓ | ↓ | ↓ | 220-2 |
| Example 3 | ↓ | ↓ | ↓ | 2.4 | ↓ | ↓ | ↓ | 220-10 |
| Example 4 | ↓ | ↓ | Aluminum isopropoxide | 12.3 | ↓ | ↓ | 2.1 | 180-2 |
| Example 5 | ↓ | ↓ | ↓ | 13.5 | ↓ | 19.5 | 1.9 | 220-2 |
| Example 6 | ↓ | ↓ | ↓ | 12.3 | ↓ | 23.4 | 1.7 | 220-2 |
| Example 7 | ↓ | ↓ | ↓ | ↓ | ↓ | 19.6 | 2.1 | 220-10 |
| Comparative Example 1 | ↓ | ↓ | Not added | 0 | ↓ | ↓ | 1.9 | 220-10 |
| Comparative Example 2 | ↓ | ↓ | Aluminum glycinate | 8.1 | ↓ | 19.1 | 1.4 | 180-2 |
| Comparative Example 3 | ↓ | ↓ | ↓ | ↓ | ↓ | ↓ | 2.0 | 220-10 |

**[Table 2]**

| Sample | Oxygen transmission rate | Water vapor transmission rate | Degree of yellowness | Optical properties | | Infrared absorption spectrum | X-ray fluorescence evaluation | |
|---|---|---|---|---|---|---|---|---|
| | (cc/m²•day•atm) | (g/m²·day) | b* value | TT | Hz | Maximum absorption wave number | P/Zr | Al/Zr |
| | (40°C-90% RH) | (40°C-90% RH) | | (%) | (%) | (cm⁻¹) | | |
| Example 1 | 0.3 | 0.4 | 0.9 | 97 | 12 | 1039 | 1.37 | 0.13 |
| Example 2 | 1.3 | 5.2 | 1.1 | 95 | 14 | 1043 | 1.35 | 0.06 |
| Example 3 | 0.2 | 1.5 | 1.3 | 94 | 7 | 1044 | 1.37 | 0.13 |
| Example 4 | 1.2 | 0.4 | 1.0 | 95 | 8 | 1096 | 1.33 | 0.26 |
| Example 5 | 2.8 | 1.0 | 1.6 | 94 | 29 | 1102 | 1.30 | 0.35 |
| Example 6 | 0.6 | 0.2 | 1.2 | 95 | 30 | 1093 | 1.82 | 0.26 |
| Example 7 | 0.6 | 0.6 | 1.3 | 94 | 11 | 1097 | 1.36 | 0.26 |
| Comparative Example 1 | 0.9 | 6.0 | - | 94 | 2 | 1039 | 1.39 | N.D. |
| Comparative Example 2 | 153.1 | - | - | 96 | 18 | 1098 | - | - |
| Comparative Example 3 | 0.9 | 0.2 | 2.2 | 94 | 14 | 1094 | 1.34 | 0.25 |

### Abbreviations in Table 1 and 2

NV: solid content of the metal oxide in the metal oxide sol, ZSL-00120B: crystalline zirconium oxide, TT: total light transmittance, Hz: haze, P/Zr: content ratio of the phosphorus element (P) derived from the phosphoric acid compound to the zirconium element (Zr) in the metal oxide in the gas-barrier laminate, Al/Zr: content ratio of the aluminum element (Al) derived from the additive to the zirconium element (Zr) in the metal oxide in the gas-barrier laminate.

In Table 2, "-" means "not carried out".

### Industrial Applicability

The gas-barrier coating composition of the present invention is capable of forming a coating film with excellent oxygen barrier properties and water vapor barrier properties, has a reduced degree of yellowness, and can be suitably used as a transparent high barrier packaging material.

### Reference Signs List

1 Base material, 2 Anchor coat layer, 3 Gas-barrier layer, 4 Adhesive layer, 5 Moisture-resistant resin layer

## Claims

1. A gas-barrier coating composition, comprising: at least one selected from a metal alkoxide, a hydrolysate of the metal alkoxide, and a metal hydroxide; a metal oxide; and a phosphoric acid compound or sulfuric acid compound.

2. The gas-barrier coating composition according to claim 1, wherein a metal species of the metal alkoxide and the metal hydroxide is at least one selected from aluminum, titanium, iron, and zirconium.

3. The gas-barrier coating composition according to claim 1 or 2, wherein the metal alkoxide is at least one selected from methoxide, ethoxide, propoxide, isopropoxide, butoxide, isobutoxide, sec-butoxide, and tert-butoxide.

4. The gas-barrier coating composition according to claim 1 or 2, wherein the metal alkoxide is aluminum isopropoxide.

5. The gas-barrier coating composition according to claim 1 or 2, wherein the metal hydroxide is aluminum hydroxide.

6. The gas-barrier coating composition according to claim 1 or 2, wherein the metal oxide is zirconium oxide or aluminum oxide.

7. The gas-barrier coating composition according to claim 1 or 2, wherein the phosphoric acid compound is at least one selected from orthophosphoric acid, metaphosphoric acid, a polyphosphoric acid, and a cyclic polyphosphoric acid.

8. A gas-barrier laminate comprising, on a base material, a coating film including the gas-barrier coating composition described in claim 1 or 2, wherein the coating film is a reaction product produced by a reaction of: at least one selected from a metal alkoxide, a hydrolysate of the metal alkoxide, and a metal hydroxide; a metal oxide; and a phosphoric acid compound or sulfuric acid compound.

9. The gas-barrier laminate according to claim 8, wherein the coating film has a b* value of less than 2.2 as measured by color measurement.

10. The gas-barrier laminate according to claim 8, wherein a value of a content ratio (Al/Zr) between Zr(Zr-kα) and Al(Al-kα) in the coating film by X-ray fluorescence measurement is in a range from 0.06 to 0.35.

11. The gas-barrier laminate according to claim 8, wherein a value of a content ratio (P/Zr) between Zr(Zr-kα) and P(P-kα) in the coating film by X-ray fluorescence measurement is in a range from 1.30 to 1.82.

12. The gas-barrier laminate according to claim 8, further comprising an anchor coat layer provided between the base material and the coating film.

13. The gas-barrier laminate according to claim 8, wherein, in a case where the base material comprises a biaxially stretched polyester with a thickness of 12 µm, the coating film in an applied amount of 2.0 g/m² is formed on the base material, and a non-stretched polypropylene film with a thickness of 50 µm is disposed on the coating film via an adhesive layer, the gas-barrier laminate has an oxygen transmission rate of 25 cc/m²•day•atm (at 40°C and 90% RH) or less and a water vapor transmission rate of 5.5 g/m²•day (at 40°C and 90% RH) or less.
